# EUROPÄISCHE PATENTANMELDUNG

(11) **EP 2 436 502 A2**
(43) Veröffentlichungstag der Anmeldung: **04.04.2012**
(21) Anmeldenummer: 11181384.6
(22) Anmeldetag: 15.09.2011
(51) Int. Cl.: B29C 47/00, B29L 23/00, B29L 16/00

(54) **Verfahren zur Herstellung eines flexiblen Saugschlauches und hergestelletes Saugschlauch**

(30) Priorität: 30.09.2010 DE 102010041816
(71) Anmelder: BSH Bosch und Siemens Hausgeräte GmbH, 81739 München (DE)
(72) Erfinder: Flegler, Alexander, 97616 Bad Neustadt (DE); Geis, Marko, 97640 Oberstreu (DE); Illig, Roland, 97618 Heustreu (DE); Weigand, Artur, 97618 Niederlauer (DE)

(57) **Zusammenfassung**

Die Erfindung betrifft insbesondere ein Verfahren zur Herstellung eines flexiblen Saugschlauches (10) aus einem extrusionsfähigen Material (20) umfassend die folgenden Schritte:
i) Bereitstellen eines extrusionsfähigen Materials (20);
(ii) Extrusion eines Endlosprofils (30) mit einer Extrusionsdüse (21); und
(iii) Bilden eines Saugschlauches (10) durch Verbinden der axialen und/oder radialen Ränder (31) des Endlosprofils (30);

wobei die Extrusionsdüse (21) in Schritt (ii), durch die das Material (20) zu einem Endlosprofil (30) extrudiert wird, so gestaltet oder angeordnet ist, dass das Endlosprofil (30) durch die Extrusionsdüse (21) zu einem gekrümmten Endlosprofil (30a) geformt wird.

Die vorliegende Erfindung ermöglicht somit eine einfachere und kostengünstigere Herstellung eines Saugschlauchs (10), weiter einer Verbesserung der Strömungseigenschaften an der Innenseite (12) des Saugschlauchs (10) und einer damit einhergehenden Verbesserung der Saugleistung, sowie mit einer Verringerung der Betriebsgeräusche von Staubsaugerschläuchen (10).

## Beschreibung

### Gebiet der Erfindung

Die vorliegende Erfindung betrifft ein Verfahren zur Herstellung eines flexiblen Saugschlauches aus einem extrusionsfähigen Material. Weiterhin betrifft die Erfindung einen flexiblen Saugschlauch, insbesondere für einen Staubsauger, der nach dem erfindungsgemäßen Verfahren hergestellt ist.

### Hintergrund der Erfindung

Flexible Saugschläuche, insbesondere solche mit einem s- oder wellenförmigen Querschnittprofil, werden im Stand der Technik in der Regel aus einem Endlosprofil aus extrusionsfähigem Material, insbesondere Kunststoff, beispielsweise Polyethylen, hergestellt. Das Endlosprofil wird nach dem Erkalten wendelförmig aufgewickelt und die axialen und/oder radialen Ränder des Endlosprofils zu einem Saugschlauch verbunden, z.B. durch Verkleben, mitunter von Zuhilfenahme weiterer Komponenten, sowie Verschweißen, oder alternativerer bekannter Fügeverfahren. Ein solcher Saugschlauch wird beispielsweise in der DE 751 621 offenbart.

Der Nachteil einer derartigen Herstellung kann sein, dass die im Wesentlichen gerade Form des Endlosprofils erst nach dem Erkalten zu einer Wendellform und dann zu einem Saugschlauch weiterverarbeitet wird. Die Wendelform wird meist durch nachträgliches Aufwickeln des Endlosprofils erreicht. Hierbei kann das erkaltete Material starken Verformungskräften ausgesetzt sein. Dabei können zum einen eine Dehnung des Materials auf der Außenseite des späteren Saugschlauches und weiter eine gleichzeitige Stauchung des Materials auf der Innenseite entstehen. Zum anderen können weitere Spannungen in dem Material durch die Spiralsteigung entstehen, welche umso stärker sind, je größer die Spiralsteigung ist, vor allem bei mehrgängigen Profilsteigungen. Durch diese Beanspruchung des Materials kann es schon oft vor der Bildung des eigentlichen Saugschlauches zu unerwünschten Unebenheiten oder sogar zu einer Faltenbildung vor allem an der Innenseite des Materials kommen. Dies ist nachteilig für Saugschläuche, die einen möglichst geringen Strömungswiderstand aufweisen sollen, um damit möglichst energieeffiziente Staubsauger bereitzustellen. Bekannte ein- und mehrgängige Saugschläuche tragen einer möglichst glatten und verwerfungsfrei verlaufenden Innenseite wenig Rechnung.

Ein weiterer Nachteil einer derartigen bekannten Herstellung von Saugschläuchen kann auch sein, dass die axialen und/oder radialen Ränder des Endlosprofils, welche miteinander verbunden werden müssen, um einen dichten Saugschlauch herzustellen, Verformungskräften ausgesetzt sind. Weiter nachteilig kann daran sein, dass dadurch ein unerwünschter Versatz der aneinanderzufügenden Flächen entsteht und dadurch an den Verbindungsstellen unerwünschte Unebenheiten aufweisen. Diese dann an der Innenseite des Saugschlauchs entstandenen Kontursprünge, können sich wiederum nachteilig auf die Strömungseigenschaften des Saugschlauches auswirken.

Bei derartigen Unebenheiten an der Innenseite eines Saugschlauches für einen Staubsauger, können beim Betrieb des Saugschlauches nachteilige Luftverwirbelungen entstehen, welche den Strömungswiderstand negativ beeinflussen und weiter die Saugleistung, sowie den energieeffizienten Betrieb eines Staubsaugers herabsetzen. Die Folge kann eine Reduzierung der Luftmenge sein, die einen solchen Saugschlauch durchströmt und somit eine reduzierte Staubaufnahme durch einen solchen Staubsauger zur Folge haben, der mit einem solchen Saugschlauch betrieben wird. Weiter nachteilig daran kann sein, dass die maximale Zugbeanspruchung des Saugschlauchs, infolge von unsauberen Überlappungen an den Fügestellen herabgesetzt ist.

### Der Erfindung zugrundeliegende Aufgabe

Der Erfindung liegt daher die Aufgabe zugrunde, ein verbessertes alternatives Verfahren bereitzustellen, bei dem ein Saugschlauch mit einem reduzierten Strömungswiderstand und auch mit mehrgängigen Steigungen hergestellt werden kann. Weiter soll gegenüber dem Stand der Technik ein Saugschlauch für einen Staubsauger der Eingangs näher beschriebenen Art so weitergebildet werden, dass insbesondere die Nachteile der genannten Saugschläuche überwunden werden können.

### Erfindungsgemäße Lösung

Die Bezugszeichen in sämtlichen Ansprüchen haben keine einschränkende Wirkung, sondern sollen lediglich deren Lesbarkeit verbessern.

Das erfindungsgemäße Verfahren zur Herstellung von Saugschläuchen baut auf gattungsgemäße Verfahren dadurch auf, dass die Extrusionsdüse in dem Schritt (ii), durch die das Material zu einem Endlosprofil extrudiert wird, so gestaltet oder angeordnet ist, dass das Endlosprofil durch die Extrusionsdüse in eine gekrümmte Form gebracht wird. Dies kann ermöglichen, ein Endlosprofil bereitzustellen, welches selbst bereits eine gekrümmt Form aufweist, welches frei von inneren Spannungen ist und bei nachfolgenden Verarbeitungsschritten zu einem Saugschlauch nur noch einer geringen Verformung bedarf. Im Zusammenhang mit der vorliegenden Erfindung wird dabei unter einem Saugschlauch eine flexible staub- und luftleitende Verbindung verstanden, wobei Staubpartikel an einem Saugmund aufgenommen wird und über den Saugschlauch zu dem Staubsauger transportiert werden kann. Hierzu kann ein Ende des Saugschlauchs mit der Staubsaugerdüse, einem Handgriff oder einem Staubsauerrohr und das andere Ende des Saugschlauchs mit einer Ansaugöffnung oder einem Ansaugstutzen des Staubsaugers verbunden werden, gewöhnlich über ein dafür vorgesehenes am Saugschlauch fest angebrachtes Anschlussstück, so dass die staubbeladene Saugluft über das eine Ende, das als Zugang bezeichnet werden kann, in den Saugschlauch einströmen und über das andere Ende, das als Ausgang bezeichnet werden kann, den Saugschlauch wieder verlassen kann. Natürlich kann auch ein Ende des Saugschlauchs ohne angeschlossene Staubsaugerdüse zur Staubaufnahme genutzt werden. Der Saugschlauch für einen Staubsauger ist flexibel, damit der Benutzer die Staubsaugerdüse, z.B. eine Bodendüse relativ zu dem Staubsauger bewegen kann, ohne den Staubsauger bewegen zu müssen. Außerdem kann der erfindungsgemäße einstückige Saugschlauch aus einem einheitlichen Material bestehen und weist vorteilhafterweise entlang seiner Längserstreckung die gleiche Flexibilität auf. Weiter sind unter einem Saugschlauch Ausführungen in zylindrischer oder mit konischer Gestaltung zu verstehen. Als extrusionsfähiges Material sind diejenigen Kunststoffe zu verstehen, welche bei einem Extrusionsverfahren gewöhnlich Verwendung finden. Bei einer Extrusion für Saugschläuche werden Kunststoffe, wie z. B. Polyethylen oder Polypropylen mittels Heizung in einem kontinuierlichen Verfahren in einer Schnecke aufgeschmolzen und homogenisiert und durch eine speziell geformte Extrusionsdüse gepresst. Dabei können Körper mit dem Querschnitt der Extrusionsdüse in beliebiger Länge entstehen. Dieses Verfahren wird u.a. für die Herstellung von Endlosprofilen verwendet. Als Extrusionsdüse ist dasjenige Werkzeug zu verstehen, welches bei einer Extrusion meist als formgebender Metallblock mit einer Austrittöffnung am Ende der Schnecke angeordnet ist, wobei durch die Austrittöffnung das extrusionsfähigen Kunststoffmaterial extrudiert, also hindurchgepresst wird und ein Endlosprofil erzeugen kann. Durch ein Verbinden der axialen und/oder radialen Ränder des Endlosprofils, mitunter von Zuhilfenahme weitere Elemente oder Komponenten, kann ein Saugschlauch gebildet werden. Die Ränder des Endlosprofils können prinzipiell an jeder Stelle eines Wellenbergs oder Wellentals enden. Dabei ist es jedoch von Vorteil, dass bei einer wendelförmiger Aufwicklung des Endlosprofils zu einem Saugschlauch die Ränder so geformt sind, dass sie beim Aneinanderfügen eine Saugschlauchoberfläche mit einer gleichmäßiger Wellenstruktur ergeben. Dabei ist es insbesondere bevorzugt, dass sich die Nahtstellen ein wenig überlappen, um ein Verbinden der Ränder zu erleichtern. Insbesondere ist es bevorzugt, dass die Ränder des Endlosprofils jeweils etwa in der Mitte zwischen Wellenberg und Wellental enden. Als eine gekrümmte, auch spiralförmig genannte Form des Endlosprofils ist eine solche Form zu verstehen, wobei sich das Endlosprofil mit seiner Längsachse in einer Ebene befindet.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführung der Erfindung wird das Endlosprofil durch die Extrusionsdüse zu einem schraubenförmigen Endlosprofil geformt. Als ein schraubenförmiges Endlosprofil ist eine solche Geometrie zu verstehen, wobei das Endlosprofil mit seiner Längsachse eine Kurve darstellt, die sich mit konstanter Steigung um den Mantel eines Zylinders windet. Durch die bereits schraubenförmige Gestalt des Endlosprofils ist vorteilhaft erreichbar, dass vor allem Endlosprofile mit hohen Steigungen hergestellt werden können. Weiter können vorteilhaft auch breite Endlosprofile für einen Saugschlauch verwendet werden, welche frei von inneren Spannungen sind. Ein breites Endlosprofil in Verbindung mit einer hohen Steigung kann zu kürzeren Fertigungszeiten für einen Saugschlauch führen.

Vorteilhafterweise wird das Endlosprofil durch die Extrusionsdüse zu einem schraubenförmigen Endlosprofil geformt, wobei die Steigung des schraubenförmigen Endlosprofils im Wesentlichen der Steigung des fertigen Saugschlauchs entspricht. Dadurch dass die Steigung des schraubenförmigen Endlosprofils in der Extrusionsdüse mit der Steigung des fertigen Saugschlauchs übereinstimmt, können vorteilhaft weitere sonstigen notwendigen nachgeordneten Ver- oder Umformungsschritte zur Bildung eines Saugschlauchs entfallen. Dadurch ist vorteilhaft nach dem Extrudieren des Endlosprofils lediglich nur noch ein Fügevorgang der axialen und/oder radialen Ränder des Endlosprofils zu einem Saugschlauch erforderlich. Mit anderen Worten: die vorliegende Erfindung sieht im Gegensatz zum Stand der Technik vor, dass das extrudierte Endlosprofil, aus dem später ein Saugschlauch geformt werden soll, gleich in einer Schraubenform bereitzustellen, wobei die Schraubenform des Endlosprofils bevorzugt eine Steigung aufweist, welche im Wesentlichen der Steigung des fertigen Saugschlauchs entspricht.

In einer alternativen bevorzugten Ausführungsform wird das Endlosprofil durch kontinuierliches Drehen der Extrusionsdüse um die Längsachse der Extruderschnecke zu einem schraubenförmigen Endlosprofil geformt, wobei die Steigung des schraubenförmigen Endlosprofils im Wesentlichen der Steigung des fertigen Saugschlauchs entspricht. Die Extrusionsdüse rotiert dabei vorteilhaft um die Längsachse der Extrusionsschnecke. Aus der Extrusionsdüse selbst kann dabei ein geradliniges, gekrümmtes oder auch schraubenförmiges Endlosprofil austreten. Die Längsachse des Endlosprofils erstreckt sich dabei in Richtung der geraden oder auch gekrümmten Form der Extrusionsdüse. Vorteilhaft kann durch ein solches Verfahren ein Saugschlauch hergestellt werden, wobei das geradlinige, gekrümmte oder schraubenförmige Endlosprofil sich mit oder um die Drehachse der Extrusionsdüse dreht. Das um die Drehachse der Extrusionsdüse gewundene Endlosprofil wird somit zu einem Saugschlauch geformt.

Zweckmäßiger Weise wird das Endlosprofil vorteilhaft durch ein der Extrusionsdüse nachgelagertes Umformelement weiter verformt werden. Mit anderen Worten: durch das nachgelagerte Umformelement kann das Endlosprofil eine weitere Änderung der gekrümmten oder schraubenförmigen Form erfahren. Ein solches verformendes Umformelement kann als Walze oder Rolle ausgebildet sein, und an der Innen- und/oder der Außenseite des Endlosprofils angreifen und eine weitere Änderung des Endlosprofils, insbesondere auf dessen Steigung oder Krümmung bewirken. Vorteilhaft kann dadurch ein Saugschlauch mit sehr engen Durchmessertoleranzen hergestellt werden. Weiter kann dadurch vorteilhaft der Schlauchdurchmesser auch so verändert werden, dass konische Schläuche hergestellt werden können.

In einer weitern bevorzugten Ausführung der Erfindung wird das Endlosprofil als ein wellenförmiger Querschnitt extrudiert, wobei sich der wellenförmige Querschnitt quer zur Längserstreckung des Endlosprofils erstreckt. Zur besseren Flexibilität des Saugschlauches werden die Endlosbänder bevorzugt mit einem Wellenprofil versehen, welches dem Saugschlauch einerseits Belastungen quer zu dessen Längserstreckung gewährleistet und andererseits eine Bewegbarkeit in dessen Längserstreckung ermöglicht. Zwar sind auch glatte Endlosbänder zur Herstellung von Saugschläuchen möglich, jedoch sind solche Schläuche relativ biegesteif. Das Endlosprofil wird daher bevorzugt mit einem Wellenprofil versehen, wobei sich das Wellenprofils vorzugsweise quer zur Längserstreckung des Endlosprofils erstreckt.

In einer weitern bevorzugten Ausführung der Erfindung wird das Endlosprofil mit aus zwei, drei, vier oder mehr sich aneinanderreihenden wellenförmigen Querschnitten extrudiert. Dies ist insbesondere dann von Vorteil, wenn das Endlosprofil mit einem Wellenprofil wie zuvor beschrieben versehen ist. Im Stand der Technik werden meist Bänder mit einem oder höchstens zwei wellenförmigen Querschnitten verwendet, um die Verformung beim schraubenförmigen Aufwickeln gering zu halten. Das bedeutet, dass die daraus gefertigten Saugschläuche nur ein oder zwei Wendeln aufweisen. Durch das erfindungsgemäße Verfahren können auch mehrgängige Saugschläuche hergestellt werden, insb. wenigstens drei, vier oder mehr Wendeln. Der Vorteil von breiteren Endlosprofilbändern liegt darin, dass weniger Verbindungsnähte vorhanden sein können und somit die Dichtung des Saugschlauchs leichter zu gewährleisten ist. Außerdem bedeutet eine Verringerung der Anzahl der Nähte einen einfacheren und kostengünstigeren Herstellungsprozess. Weiter kann die Anzahl der durch die Verbindungen hervorgerufenen Unebenheiten an der Innenseite des Saugschlauchs verringert werden.

In einer weitern bevorzugten Ausführung der Erfindung wird das Endlosprofil zusätzlich mit einer flächigen Abdeckung extrudiert, wobei die flächige Abdeckung im fertigen Saugschlauch die durch die Wellenberge des wellenförmigen Querschnitts gebildeten Hohlräume auf der Innenseite des Saugschlauchs zumindest teilweise überdeckt. Vorzugsweise kann die flächige Abdeckung so angeordnet sein, dass es an der zum Strömungseintritt gewandten Seite der Innenseite des Saugschlauchs mit der Spitze eines Wellentals verbunden ist. Somit kann der durch die Wellenberge des wellenförmigen Querschnitts gebildete Raum zumindest teilweise abgedeckt sein. Dabei wird die saugluftleitende Innenseite des Saugschlauchs widerstandsärmer ausgebildet, da die Luft weniger durch die von den Wellenbergen gebildeten Hohlräume strömt und sich somit weniger Luftverwirbelungen bilden können. Vorzugsweise ist die flächige Abdeckung weiter so zur Längsachse des Saugschlauchs hin ausgerichtet, dass es auftreffende Staubpartikel zur Mitte des Saugschlauchs ablenkt. In der Mitte des Saugschlauchs herrschen bei einem Betrieb des Staubsauges höhere Strömungsgeschwindigkeiten vor und dadurch kann ein sicherer Transport der Staubpartikel zu einer Staubsammeleinheit gewährleistet werden.

In einer alternativen bevorzugten Ausführung der Erfindung wird das Endlosprofil zusätzlich mit einer flächigen Abdeckung extrudiert, wobei die flächige Abdeckung im fertigen Saugschlauch die durch die Wellenberge des wellenförmigen Querschnitts gebildeten Hohlräume auf der Innenseite des Saugschlauchs vollständig abschließt. Die flächige Abdeckung kann alternativ auch so ausgestaltet sein, dass es die Hohlräume der Wellenberge vollständig abschließt. Wird ein Staubsaugersaugschlauch so ausgebildet, kann der Saugluftstrom ohne wesentliche Luftverwirbelung in den Hohlräume der Wellenberge durch den Saugschlauch strömen, und die Saugleistung eines Staubsaugers mit einem solchen betriebenen Saugschlauch wird nicht beeinträchtigt. Ein weiterer Vorteil einer solchen flächigen Abdeckung, welches die Hohlräume der Wellenberge auf der Innenseite des Saugschlauchs zumindest teilweise bedeckt, kann sein, dass sich weniger Partikel (z.B. Schmutzpartikel) im Saugschlauch absetzen, insbesondere in den Hohlräume der Wellenberge. Derartige Saugschläuche sind bereits in der deutschen Patentanmeldung DE 10 2005 018 373 A1 offenbart. Auf diese Offenbarung wird hierin ausdrücklich Bezug genommen.

In einer weiteren bevorzugten Ausführungsform wird nach dem Verfahren ein flexibler Saugschlauch hergestellt. Solche Saugschläuche sind besonders kostengünstig herzustellen und weisen zudem einen geringen Strömungswiderstand auf.

Die vorliegende Erfindung ermöglicht somit eine einfachere und kostengünstigere Herstellung eines Saugschlauchs, weiter einer Verbesserung der Strömungseigenschaften an der Innenseite des Saugschlauchs und einer damit einhergehenden Verbesserung der Saugleistung, sowie mit einer Verringerung der Betriebsgeräusche von Staubsaugerschläuchen.

### Kurzbeschreibung der Zeichnungen

Weitere vorteilhafte Ausgestaltungen der Erfindung werden nachfolgend an Hand zweier in der Zeichnung dargestellter Ausführungsbeispiele, auf welche die Erfindung jedoch nicht beschränkt ist, näher beschrieben.

Es zeigen schematisch:
- Fig. 1: eine Prinzipdarstellung einer Extrusion eines Endlosprofils;
- Fig. 2 a: ein eingängiges Endlosprofil im Querschnitt;

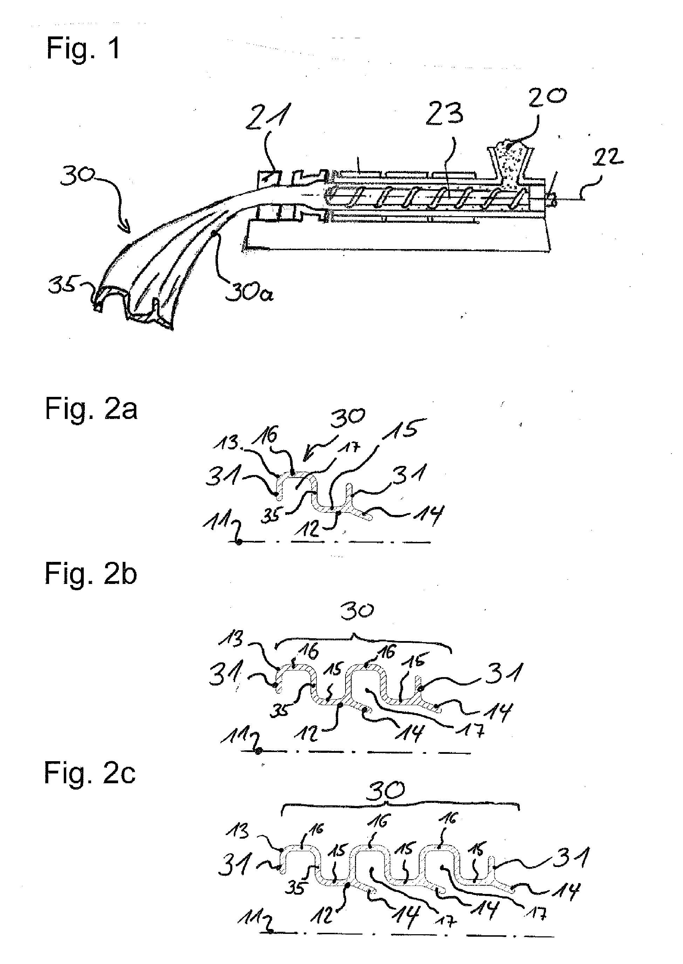

- Fig. 2: b ein zweigängiges Endlosprofil im Querschnitt;
- Fig. 2 c: ein dreigängiges Endlosprofil im Querschnitt;

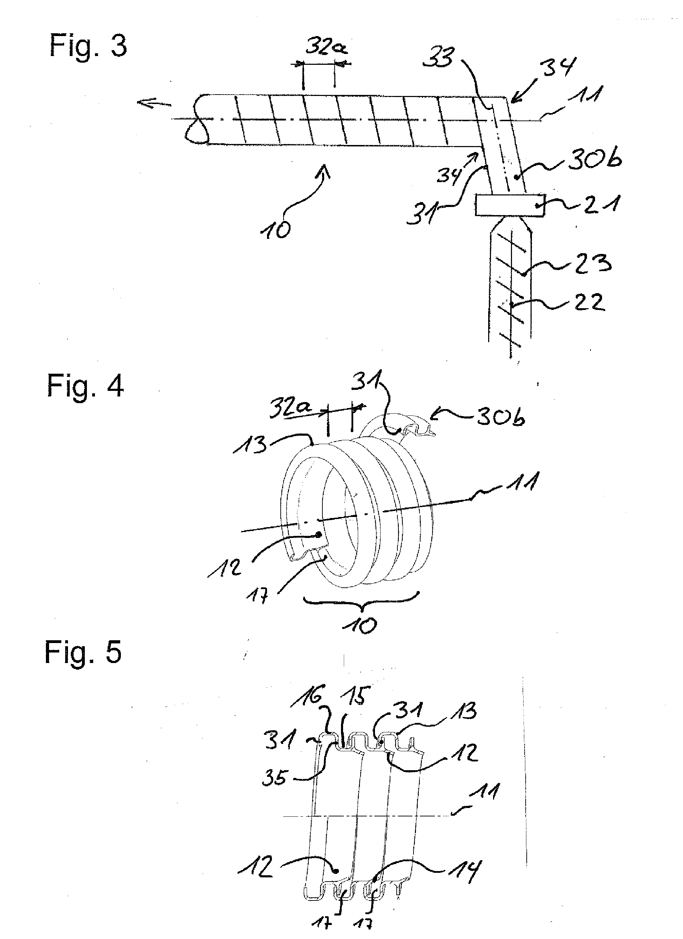

- Fig. 3: eine Prinzipdarstellung eines ersten Ausführungsbeispiels zur Fertigung eines Saugschlauches;
- Fig. 4: einen Saugschlauch am Fertigungsbeginn in einer perspektivischen Ansicht nach Fig. 3;
- Fig. 5: einen Vollschnitt eines Saugschlauches nach Fig. 4; und

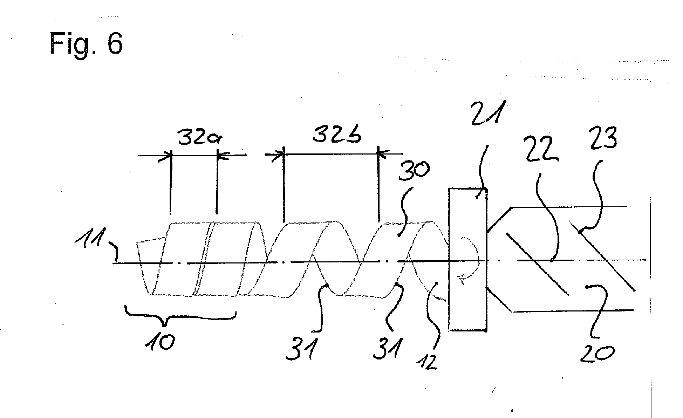

- Fig. 6: eine Prinzipdarstellung eines zweiten Ausführungsbeispiels zur Fertigung eines Saugschlauches.

### Ausführliche Beschreibung anhand von vier Ausführungsbeispielen

Bei der nachfolgenden Beschreibung zweier bevorzugter Ausführungsformen der vorliegenden Erfindung bezeichnen gleiche Bezugszeichen gleiche oder vergleichbare Komponenten.

Fig. 1 zeigt eine Prinzipdarstellung zur Extrusion eines Endlosprofils 10. Ein extrusionsfähiges Material 20 in Form eines Kunststoffgranulates wird in einem Trichter bereitgestellt. In einem beheizten Zylinder dreht sich um dessen Längsachse 22 eine Extruderschnecke 23, welches das Material 20 nach vorne fördert, verdichtet, plastifiziert und homogenisiert. Der Extrusionsschnecke 23 ist eine Extrusionsdüse 21 vorgelagert, die dem austretenden Material 20 den Querschnitt 35 des Endlosprofils 30 gibt. Weiter besitzt die Extrusionsdüse 21 gegenüber der Längsachse 22 der Extruderschnecke 23 eine Krümmung, also eine Richtungsänderung pro Längeneinheit zur Längsachse 22, sodass das Endlosprofil 30 die Extrusionsdüse 21 selbst bereits als ein gekrümmtes Endlosprofil 30a verlässt.

Fig. 2a zeigt ein eingängiges Endlosprofil 30 mit einem Querschnitt 35, welches eine s- oder welligförmige Form mit einem Querschnitt 35 besitzt. Ein sich von der Längsachse 11 eines Saugschlauches 10 radial nach außen erstreckender Rand 31 geht in einen Wellenberg 16 über. Der Rand 31 bildet auch die Außenseite 13 des fertigen Saugschlauches 10. Ein sich anschließender zur Längsachse 11 gerichteter Bereich geht in ein Wellental 15 über, welche bei einem fertigen Saugschlauch 10 die Innenseite 12 des Saugschlauchs 10 bildet. An das Wellental 15 schließt sich einerseits ein nach außen erstreckender Rand 31 an, sowie andererseits eine in Richtung der Längsachse 11 gerichtete Abdeckung 14. Der Wellenberg 16 umschließt mit den nach außen erstreckenden Rändern 31 einen Hohlraum 17.

Fig. 2b, sowie Fig. 2c zeigen ein zweigängiges und dreigängiges Endlosprofil im Querschnitt mit einer Querschnittsfläche 35. Im Unterschied zu Fig. 2a schließt sich jeweils an das Wellental 15 ein von der Längsachse 11 des Saugschlauchs 10 nach außen gerichteter Rand 31 an, der in einen zweiten oder dritten sich wiederholenden Wellenberg 16 und Wellental 15 übergeht. Der Querschnitt 35 eines eingängigen Endlosprofils 30 nach Fig. 2a mit dem Hohlraum 17 wiederholt sich bei Fig. 2b also ein zweites, bei Fig. 2c ein drittes Mal.

Fig. 3 zeigt eine Prinzipdarstellung eines ersten Ausführungsbeispiels zur Fertigung eines Saugschlauches 10 mit einem schraubenförmigen Endlosprofil 30b. Wie in Fig. 1 näher beschrieben, wird ein Endlosprofil 30 extrudiert. Deutlich zu erkennen ist in der Fig. 2, dass die Längsachse 33 des schraubenförmigen Endlosprofils 30b in einem Winkel zu der Längsachse 22 der Extruderschnecke 23 austritt. Die Extrusionsdüse 21 formt einerseits das Endlosprofil 30 in die Zeichenebene hinein und andererseits erfährt das Endlosprofil 30 eine seitliche Auslenkung zu der Längsachse 22 der Extruderschnecke 23, sodass das Endlosprofil 30 selbst als ein schraubenförmiges Endlosprofil 30b austritt. Das schraubenförmige Endlosprofil 30b erfährt durch nicht näher dargestellte Umformelemente 34, welche als Walzen oder Rollen ausgeführt sein können, sowie an der Innen- (12) und/oder der Außenseite (13) angreifen, weitere Verformungen zu der gekrümmten Form und wird zu einem Saugschlauch 10 aufgewickelt, wobei in Richtung des dargestellte Pfeils der fertig aufgewickelte Saugschlauchs 10 abtransportiert wird. Die Längsachse 22 der Extruderschnecke 23 und die Längsachse 11 des fertigen Saugschlauches 10 stehen dabei in einem rechten Winkel.

Fig. 4 zeigt einen Abschnitt eines Saugschlauches 10 am Fertigungsbeginn in einer perspektivischen Ansicht nach Fig. 3 mit einem eingängigen schraubenförmigen Endlosprofil 30b. Das schraubenförmige Endlosprofil 30b kann mit nicht näher dargestellten Umformelementen 34, welche als Rollen oder Walzen an der Innen- 12 und/oder Außenseite 13, sowie an den Rändern 31 angreifen, eine weitere Verformung erfahren, sodass die Steigung 32b des schraubenförmigen Endlosprofils 30b der Steigung 32a des Saugschlauchs 10 entspricht. Die zusätzliche Verformung des schraubenförmige Endlosprofils 30b erfolgt in einer einzelnen oder in mehren nacheinander geschalteten Stufen mit den Umformelementen 34.

Fig. 5 zeigt einen Vollschnitt eines Saugschlauches 10 nach Fig. 4 mit einem eingängigen Endlosprofil 30. Die beiden seitlichen Ränder 31 des eingängigen Endlosprofils 30 sind mit einer nicht weiter dargestellten zusätzlichen Komponente aneinandergefügt und bilden einen luftdichten Saugschlauch 10. Die an den Wellentälern 15 angebundenen Abdeckungen 14 weisen in Richtung der Strömungsrichtung der Saugluft. Die Abdeckungen 14 überdecken dabei teilweise die durch die Wellenberge 16 gebildeten Hohlräume 17. Weiter weisen die Abdeckungen 14 in Richtung der Längsachse 11 des Saugschlauchs 10 und sind weiter leicht zu der Längsachse 11 hin ausgerichtet und dienen somit als Prallfläche für auftreffende Staubpartikel.

Fig. 6 zeigt eine Prinzipdarstellung eines zweiten Ausführungsbeispiels zur Fertigung eines Saugschlauches 10. Aus einer drehbar angeordneten Extrusionsdüse 21 tritt in Verlängerung der Längsachse 22 der Extrusionsschnecke 23 ein gekrümmtes 30a oder schraubenförmiges Endlosprofil 30b aus. Der Austrittsposition des Endlosprofils 30 ist zu der Längsachse 22 der Extruderschnecke 23 beabstandet, die Rotationsachse der Extrusionsdüse 21 und die Längsachse 33 des Endlosprofil überlappen nicht. Die Steigung 32b des austretenden Endlosprofils 30 ist dabei größer als die Steigung 32a des Saugschlauches 10. Durch kontinuierliches Drehen der Extrusionsdüse 21 um die Längsachse 22 der Extrusionsschnecke 23 mit einer ersten Drehzahl und durch ein Abtransportieren des fertigen Saugschlauches 10 mit einer zweiten Drehzahl wird die Steigung 32b des austretenden Endlosprofils 30b verkürzt, sodass die Steigung 32b des austretenden Endlosprofils 30b der Steigung 32a des Saugschlauches 10 entspricht. Die Ränder 31 des schraubenförmigen Endlosprofils 30 werden über bekannte Fügeverfahren luftdicht miteinander verbunden. Der fertige Saugschlauch 10 wird in Verlängerung der Längsachse 22 der Extrusionsschnecke 23 abtransportiert und auf gewünschte Fixmaße abgelängt (nicht dargestellt). Ein wesentlicher Unterschied zu dem ersten Ausführungsbeispiel ist einerseits, dass die Längsachse 22 der Extrusionsschnecke 23 und die Längsachse 11 des fertigen Saugschlauches 10 nahezu eine Achse bilden. Weiter wird durch die unterschiedlichen Rotationsgeschwindigkeiten der Extrusionsdüse 21 und des fertigen Saugschlauches 10 auf zusätzliche Umformelemente 34 gänzlich verzichtet.

Die vorliegende Erfindung ermöglicht somit eine einfachere und kostengünstigere Herstellung eines Saugschlauchs, weiter eine Verbesserung der Strömungseigenschaften an der Innenseite des Saugschlauchs und einer damit einhergehenden Verbesserung der Saugleistung, sowie mit einer Verringerung der Betriebsgeräusche von Staubsaugerschläuchen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 10: Saugschlauch
- 11: Längsachse des Saugschlauch 10
- 12: Innenseite des Saugschlauchs 10
- 13: Außenseite des Saugschlauchs 10
- 14: Abdeckung
- 15: Wellental
- 16: Wellenberg
- 17: Hohlraum

- 20: Material
- 21: Extrusionsdüse
- 22: Längsachse der Extruderschnecke 23
- 23: Extruderschnecke

- 30: Endlosprofil
- 30a: Endlosprofil gekrümmt
- 30b: Endlosprofil schraubeförmig
- 31: Rand
- 32: Steigung
- 32a: Steigung des Saugschlauchs 10
- 32b: Steigung des Endlosprofils30
- 33: Längsachse des Endlosprofils
- 34: Umformelement
- 35: Querschnitt des Endlosprofil 30

## Patentansprüche

1. Verfahren zur Herstellung eines flexiblen Saugschlauches (10) aus einem extrusionsfähigen Material (20), umfassend folgende Schritte:
(i) Bereitstellen eines extrusionsfähigen Materials (20);
(ii) Extrusion eines Endlosprofils (30) mit einer Extrusionsdüse (21); und
(iii) Bilden eines Saugschlauches (10) durch Verbinden der axialen und/oder radialen Ränder (31) des Endlosprofils (30);
**dadurch gekennzeichnet, dass** die Extrusionsdüse (21) in Schritt (ii), durch die das Material (20) zu einem Endlosprofil (30) extrudiert wird, so gestaltet oder angeordnet ist, dass das Endlosprofil (30) durch die Extrusionsdüse (21) zu einem gekrümmten Endlosprofil (30a) geformt wird.

2. Verfahren nach Anspruch 1, **dadurch gekennzeichnet, dass** das Endlosprofil (30) durch die Extrusionsdüse (21) zu einem schraubenförmigen Endlosprofil (30b) geformt wird.

3. Verfahren nach Anspruch 2, **dadurch gekennzeichnet, dass** das Endlosprofil (30) durch die Extrusionsdüse (21) zu einem schraubenförmigen Endlosprofil (30b) geformt wird, wobei die Steigung (32) des schraubenförmigen Endlosprofils (30b) im Wesentlichen der Steigung (32b) des fertigen Saugschlauchs (10) entspricht.

4. Verfahren nach Anspruch 1 oder 2, **dadurch gekennzeichnet, dass** das Endlosprofil (30) durch kontinuierliches Drehen der Extrusionsdüse (21) um die Längsachse (22) der Extruderschnecke (23) zu einem schraubenförmigen Endlosprofil (30b) geformt wird, wobei die Steigung (32b) des schraubenförmigen Endlosprofils (30b) im Wesentlichen der Steigung (32a) des fertigen Saugschlauchs (10) entspricht.

5. Verfahren nach einem der vorherigen Ansprüche, **dadurch gekennzeichnet, dass** das Endlosprofil (30) durch ein der Extrusionsdüse (21) nachgelagertes Umformelement (34) weiter verformt wird.

6. Verfahren nach einem der vorherigen Ansprüche, **dadurch gekennzeichnet, dass** das Endlosprofil (30) als ein wellenförmiger Querschnitt (35) extrudiert wird, wobei sich der wellenförmige Querschnitt (35) quer zur Längserstreckung (33) des Endlosprofils (30) erstreckt.

7. Verfahren nach einem der vorhergehenden Ansprüche, **dadurch gekennzeichnet, dass** das Endlosprofil (30) aus zwei, drei, vier oder mehr sich aneinanderreihenden wellenförmigen Querschnitten (35) extrudiert wird.

8. Verfahren nach einem der vorhergehenden Ansprüche, **dadurch gekennzeichnet, dass** das Endlosprofil (10) zusätzlich mit einer flächigen Abdeckung (14) extrudiert wird, wobei die flächige Abdeckung (14) im fertigen Saugschlauch (10) die durch die Wellenberge (16) des wellenförmigen Querschnitts (35) gebildeten Hohlräume (17) auf der Innenseite (12) des Saugschlauchs (10) zumindest teilweise überdeckt.

9. Verfahren nach einem der Ansprüche 1 bis 7, **dadurch gekennzeichnet, dass** das Endlosprofil (30) zusätzlich mit einer flächigen Abdeckung (14) extrudiert wird, wobei die flächige Abdeckung (14) im fertigen Saugschlauch (10) die durch die Wellenberge (16) des wellenförmigen Querschnitts (35) gebildeten Hohlräume (17) auf der Innenseite (12) des Saugschlauchs (10) vollständig abdeckt.

10. Flexibler Saugschlauch (10), hergestellt nach einem Verfahren nach einem der Ansprüche 1 bis 9.
